Europäisches Patentamt

European Patent Office

Office européen des brevets

(19)

(11) Veröffentlichungsnummer: **0 332 721 B1**

(12) **EUROPÄISCHE PATENTSCHRIFT**

(45) Veröffentlichungstag der Patentschrift: **18.09.91**

(21) Anmeldenummer: **88104053.9**

(22) Anmeldetag: **15.03.88**

(51) Int. Cl.5: **G01B 11/16, B21B 37/00, G01B 9/08**

(54) **Verfahren und Vorrichtung zur Messung der Eigenspannungen in schmalen Metallbändern.**

(43) Veröffentlichungstag der Anmeldung:
20.09.89 Patentblatt 89/38

(45) Bekanntmachung des Hinweises auf die
Patenterteilung:
18.09.91 Patentblatt 91/38

(84) Benannte Vertragsstaaten:
**DE FR GB IT NL SE**

(56) Entgegenhaltungen:
**US-A- 3 040 437**
**US-A- 3 061 918**
**US-A- 4 119 380**
**US-A- 4 588 119**

**ARCHIF FÜR EISENHÜTTENWES., Band 44, Nr. 12, Dezember 1973, Seiten 907-912; H. BÜHLER et al.: "Eigenspannungsmessungen an planem und unplanem Kaltband"**

**STAHL UND EISEN, Band 95, Nr. 22, 23. Oktober 1975, Seiten 1051-1056, Düsseldorf, DE; B. BERGER et al.: "Planheitsfehler bei kaltgewalztem Band und Erprobung eines Gerätes zur Planheitsmessung"**

**PATENT ABSTRACTS OF JAPAN, Band 1, Nr. 72, 13. Juli 1977, Seite 783 E 77 & JP-A-52 9464 (TOYOTA JIDOSHA KOGYO K.K.) 25-01-1977**

**PATENT ABSTRACTS OF JAPAN, Band 7, Nr. 32 (P-174)[1177], 8. Februar 1983 & JP-A-57 186 103 (UESHIMA SEISAKUSHO K.K.) 16-11-1982**

**PATENT ABSTRACTS OF JAPAN, Band 11, Nr. 252 (P-605)[2699], 15. August 1987 & JP-A-62 56 805 (NIREKO K.K.) 12-03-1987**

**IBM TECHNICAL DISCLOSURE BULLETIN, Band 27, Nr. 4B, September 1984, Seiten 2555-2556, New York, US; W. GORGAS et al.: "Chip-flexure measurement device"**

(73) Patentinhaber: **Wieland-Werke AG**
**Postfach 4240 Graf-Arco-Strasse**
**W-7900 Ulm (Donau)(DE)**

(72) Erfinder: **Cüppers, Johannes, Dipl.-Ing.**
**Herdbruckerstrasse 26**
**W-7900 Ulm(DE)**

## Beschreibung

Die Erfindung betrifft ein Verfahren zur Messung der Eigenspannungen in schmalen Metallbändern, insbesondere aus Kupferlegierungen, durch Messung des Drallwinkels $\alpha$ und der Rollkrümmung RK bzw. der Säbelförmigkeit SF an Probestreifen, welche aus dem Band entnommen werden.

Eigenspannungen in Metallbändern werden insbesondere dadurch sichtbar, daß nach dem Längstrennen der Bänder entstehende Bandstreifen einen Drall in Längsrichtung (gekennzeichnet durch den Drallwinkel $\alpha$) gegenüber der Normallage, eine Rollkrümmung RK oder eine Säbelförmigkeit SF aufweisen. Gemäß DIN-Norm 1777 ist die Rollkrümmung RK ein Maß für die Planheit, die Säbelförmigkeit SF ein Maß für die Geradheit der Längskante des Bandstreifens.

Nach einem anderen Verfahren werden Eigenspannungen an breiten Bändern mittels Dehnungsmeßstreifen gemessen (vgl. "STAHL und Eisen" Bd. 95 (1975), S. 1051 - 1056; B. Berger et al. : "Planheitsfehler bei kaltgewalztem Band und Erprobung eines Gerätes zur Planheitsmessung").

Dabei wird ein Planheitsmeßgerät angegeben, bei dem das Band um eine Meßeinrichtung in Form einer axial geteilten Umlenkrolle umgelenkt und die Zugspannungsverteilung ermittelt wird.

Die Qualitätsanforderungen an geschnittene Bänder werden aufgrund zunehmender Automatisierung der weiterverarbeitenden Betriebe immer höher, da sich insbesondere beim Stanzen der Bänder zu sogenannten "Lead frames" Eigenspannungen an den Bandkanten nachteilig auswirken. Daher sind Messungen von Eigenspannungen unentbehrlich, wobei die o.g. Größen Drallwinkel $\alpha$, Rollkrümmung RK und Säbelförmigkeit SF in Frage kommen.

Es ist daher Aufgabe der Erfindung, ein einfaches und kostengünstiges Verfahren zur Messung dieser Größen anzugeben, das sich zudem noch in der Nähe der Rollscheren, mit denen die Bänder auf Fertigmaß geschnitten werden, durchführen läßt, und das selbst keine weiteren Spannungen in den Probestreifen induziert.

Die Aufgabe wird erfindungsgemäß durch die kennzeichnenden Merkmale der Patentansprüche 1 und 2 gelöst. Es hat sich gezeigt, daß das erfindungsgemäße Verfahren auf einfache Weise eine Messung der o.g. Größen gestattet, die alle auf eine bestimmte Länge bezogen sind.

Hinsichtlich der Messung des Drallwinkels ist es zwar bekannt, kleine Winkel unter Verwendung eines Spiegels anzuzeigen (Spiegelgalvanometer) - vgl. beispielsweise Zeller/Franke: "Das physikalische Rüstzeug des Ingenieurs", Technik-Tabellen-Verlag, 6. Auflage (1963), S. 371/372. Eine Übertragung auf die Eigenspannungsmessung wurde bisher allerdings nicht vorgenommen.

Nach einer besonderen Ausführungsform der Erfindung werden die Auslenkungen an einem Bildschirm in Skalenteilen abgelesen.

Bei der Messung des Drallwinkels $\alpha$ empfiehlt es sich, daß das Ende des Probestreifens in einem Probenhalter mit Drehteller eingespannt wird, daß der Drehteller so weit aus seiner Nullstellung gedreht wird, bis auf einem Bildschirm das reflektierte Lichtbündel auf den Probenschatten fällt, und daß der Drallwinkel $\alpha$ quantitativ auf einer Winkelskala des Drehtellers abgelesen wird. Diese Messungen werden in definiertem Abstand H von der Einspannstelle des Endes des Probestreifens vorgenommen, wobei der Bildschirm vorzugsweise senkrecht zur optischen Achse angeordnet wird.

Bei allen Messungen ist das Ende des Probestreifens vorzugsweise in definiertem Abstand y von dem Bildschirm eingespannt, bei der Messung des Drallwinkels $\alpha$ mittels Drehteller befindet sich insbesondere eine Kante des Endes in der Drehachse des Drehtellers.

Sofern als Probestreifen nicht unmittelbar ein vom Metallband abgetrennter Bandstreifen bestimmter Länge verwendet werden kann, erfolgt die Probenvorbereitung nach einer besonderen Ausführungsform der Erfindung in der Weise, daß zwei Probestreifen aus dem zu untersuchenden Band entnommen werden, indem ein Bandstreifen der Länge $L_1$ abgetrennt wird, jeweils im Abstand B von den Bandkanten zwei Längstrennungen der Länger $L_2 < L_1$ eingebracht werden, der Bandstreifen in der Mitte längsgeteilt wird und die mittleren Streifen abgetrennt werden.

Dabei empfiehlt es sich, wenn bei einer Dicke des Probestreifens von 0,08 bis 1,5 mm die Längstrennungen im Abstand B = 2 bis 6 mm eingebracht werden. Es hat sich als vorteilhaft herausgestellt, die Längstrennungen mit einer schnellaufenden Säge einzusägen, da durch den Sägeschnitt die Eigenspannungen nicht beeinflußt werden, insbesondere wenn der Bandstreifen beim Herausfahren der Säge seitlich niedergehalten wird. Gleich günstige Ergebnisse werden erzielt, wenn die Längstrennungen drahterodiert werden.

Für die Messung empfiehlt es sich, daß die Probestreifen mit dem nicht eingeschnittenen Ende eingespannt werden.

Die Erfindung betrifft weiterhin eine Meßvorrichtung zur Durchführung des erfindungsgmäßen Verfahrens. Diese Vorrichtung weist eine Lichtquelle, einen im Abstand x davon angeordneten, drehbaren Probenhalter mit mindestens zwei Einspannbacken und einen im Abstand y vom Probenhalter auf der von der Lichtquelle abgewandten Seite angeordneten Bildschirm auf, der senkrecht zu einer optischen Achse angeordnet ist, die durch das von der Lichtquelle ausgesandte Lichtbündel definiert ist, wobei der Bildschirm in definierten Höhen H oberhalb der Einspannbacken zumindest eine horizontale Markierungslinie aufweist, die mit Skalenteilen versehen ist.

Damit wird eine Vorrichtung zur Verfügung gestellt, die sich durch besonders einfachen Aufbau auszeichnet und insofern auch der Forderung gerecht wird, daß die Messung selbst an den Scheren durchgeführt werden sollte. Um die Auslenkungen des Probenschattens und des reflektierten Lichtbündels von der optischen Achse bzw. bei der Drallmessung die Koinzidenz von den Probenschatten und reflektiertem Lichtstrahl am Bildschirm genau feststellen zu können, weist dieser in einer definierten Höhe H oberhalb der Einspannbacken zumindest eine horizontale Markierungslinie auf, die mit Skalenteilen versehen ist.

Zur Verbesserung der Meßgenauigkeit empfiehlt es sich, daß die Lichtquelle annähernd paralleles Licht aussendet oder zumindest der Abstand x wesentlich größer ist als der Abstand y ($x \gg y$).

Zur Aufnahme des Probestreifens weist der Probenhalter vorzugsweise zwei zueinander parallele Einspannbacken auf, von denen mindestens eine beweglich ist.

Um den Probestreifen stets in einer definierten Position zu halten, weist eine Einspannbacke eine Ausfräsung zur Aufnahme des Endes des Probestreifens auf. Für die Messung des Drallwinkels weist der Probenhalter vorzugsweise einen mit einer Winkelskala versehenen Drehteller auf, mit dem die Einspannbacken fest verbunden sind.

Die Erfindung wird anhand der folgenden Ausführungsbeispiele näher erläutert. Es zeigt

Fig. 1     den schematischen Aufbau der Meßvorrichtung,

Fig. 2a     eine Draufsicht auf die Meßvorrichtung bei der Messung des Drallwinkels und der Rollkrümmung RK (Nullstellung des Drehtellers),

Fig. 2b     die entsprechende Ansicht des Bildschirms,

Fig. 3a     eine Draufsicht auf die Meßvorrichtung bei der Meßstellung für den Drallwinkel $\alpha$,

Fig. 3b     die entsprechende Ansicht des Bildschirms bei der Messung des Drallwinkels $\alpha$,

Fig. 4     die Messung der Säbelförmigkeit SF und

Fig. 5     die Probenvorbereitung.

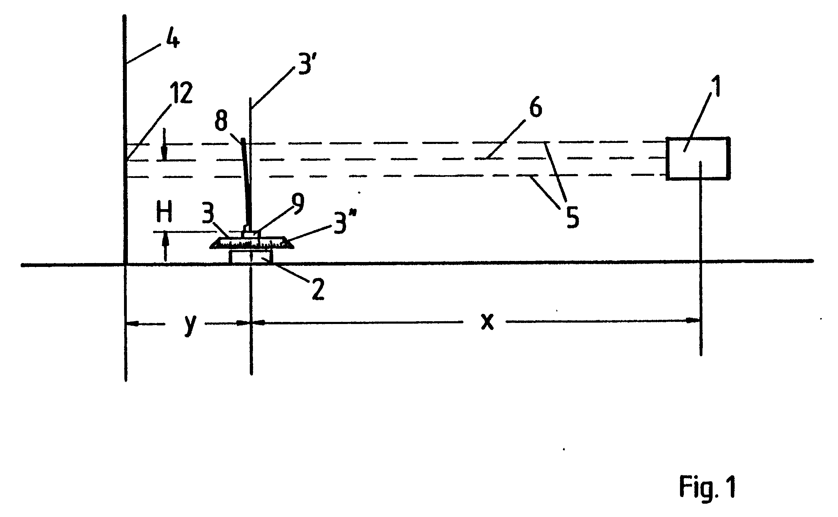

Fig. 1 zeigt den prinzipiellen Aufbau der Meßvorrichtung, bestehend aus einer Lichtquelle 1, einem Probenhalter 2 mit Drehteller (Drehachse 3'), der eine Winkelskala 3" aufweist, und einem Bildschirm 4. Die Lichtquelle 1 ist auf den im Abstand x angeordneten Probenhalter 2 gerichtet. Durch das von der Lichtquelle 1 ausgesandte Lichtbündel 5 ist eine optische Achse 6 definiert.

Im Abstand y vom Probehalter 2 - auf der von der Lichtquelle 1 abgewandten Seite - ist senkrecht zur optischen Achse 6 der Bildschirm 4 angeordnet. Üblicherweise ist der Abstand x wesentlich größer als der Abstand y ($x \gg y$).

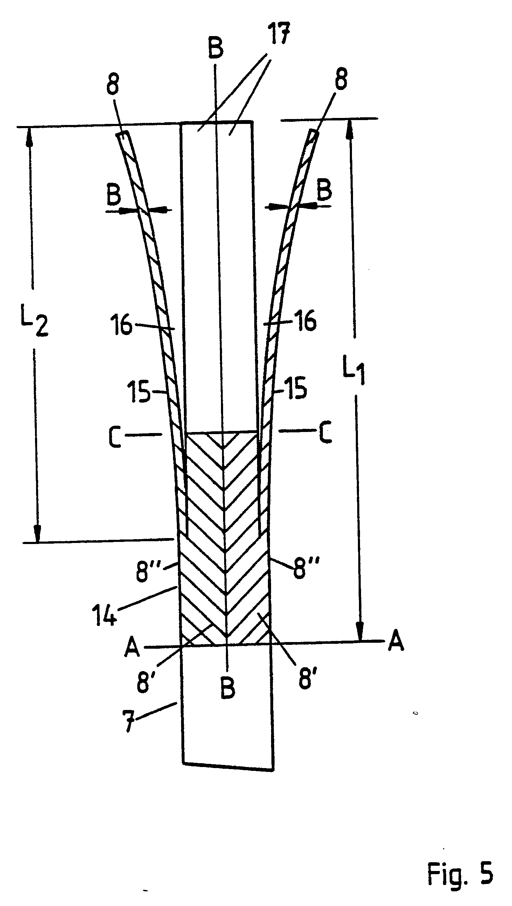

Zur Messung wird dem zu untersuchenden Metallband 7 ein Probestreifen 8 entnommen. Das Ende 8' des Probestreifens 8 (vgl. Fig. 5) wird zwischen zwei zueinander parallelen, beweglichen Einspannbacken 9 des Probenhalters 2 eingespannt. Die Einspannbacken 9 sind mit dem Drehteller 3 fest verbunden. Eine Kante 8" des Probestreifens 8 befindet sich in der Drehachse 3' des Drehtellers 3. Zur problemlosen Aufnahme des Endes 8' weist eine Einspannbacke 9 eine - nicht dargestellte - Ausfräsung auf. Bei der Nullstellung des Drehtellers 3 liegt die optische Achse 6 in der Ebene des eingespannten Endes 8' des Probestreifens 8.

Von der Lichtquelle 1 geht ein annähernd paralleles Lichtbündel 5 aus, das auf den in dem Probenhalter 2 eingespannten Probestreifen 8 trifft.

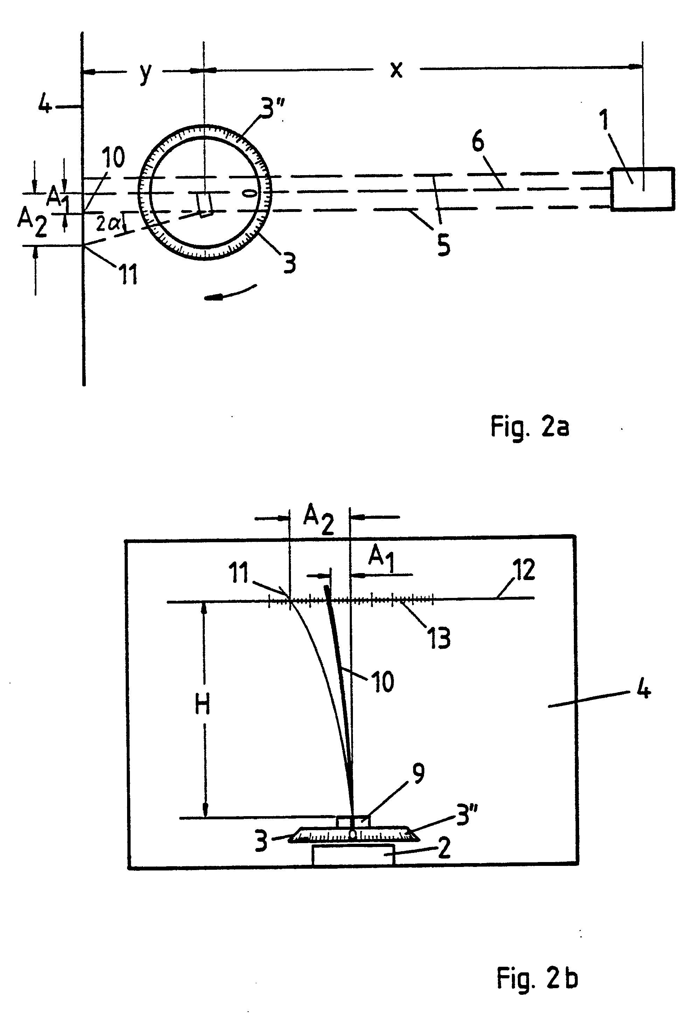

In der Draufsicht nach Fig. 2a befindet sich der Drehteller 3 in der Nullstellung. Zur Verdeutlichung ist für den Probestreifen 8 ein relativ großer Drallwinkel $\alpha$, angenommen. Die Messung von Drallwinkel $\alpha$ und Rollkrümmung RK wird nun folgendermaßen durchgeführt:

Das von der Lichtquelle 1 ausgehende Lichtbündel 5 wirft von dem Probestreifen 8 einen Probenschatten 10 auf den Bildschirm 4. Gleichzeitig wirkt die blanke Oberfläche des Probestreifens 8 als Spiegel und wirft ebenfalls ein reflektiertes Lichtbündel 11 auf den Bildschirm 4. Auf dem Bildschirm 4 ist in einer definierten Höhe H oberhalb der Oberkante der Einspannbacken 9 eine horizontale Markierungslinie 12 mit Skalenteilen 13 angeordnet.

Die Auslenkung $A_1$, welche der Probenschatten 10 in der Höhe H von der optischen Achse 6 erfährt, ist ein Maß für die Rollkrümmung RK. Die Auslenkung $A_2$ des reflektierten Lichtbündels 11 ist ein Maß für den Drallwinkel $\alpha$, und zwar jeweils bezogen auf eine bestimmte Länge (im vorliegenden Fall Höhe H). Die Auslenkungen $A_1$ und $A_2$ werden senkrecht zu der Ebene gemessen, in der das eingespannte Ende 8' des Probestreifens 8 und die optische Achse 6 liegen.

Von den Auslenkungen $A_1$ und $A_2$ kann gemäß Fig. 2a über die trigonometrische Beziehung

$$\alpha = \frac{\arctan\left[\dfrac{(A_2 - A_1)}{Y}\right]}{2} \quad \text{näherungsweise auf den Drallwinkel in Grad}$$

geschlossen werden.

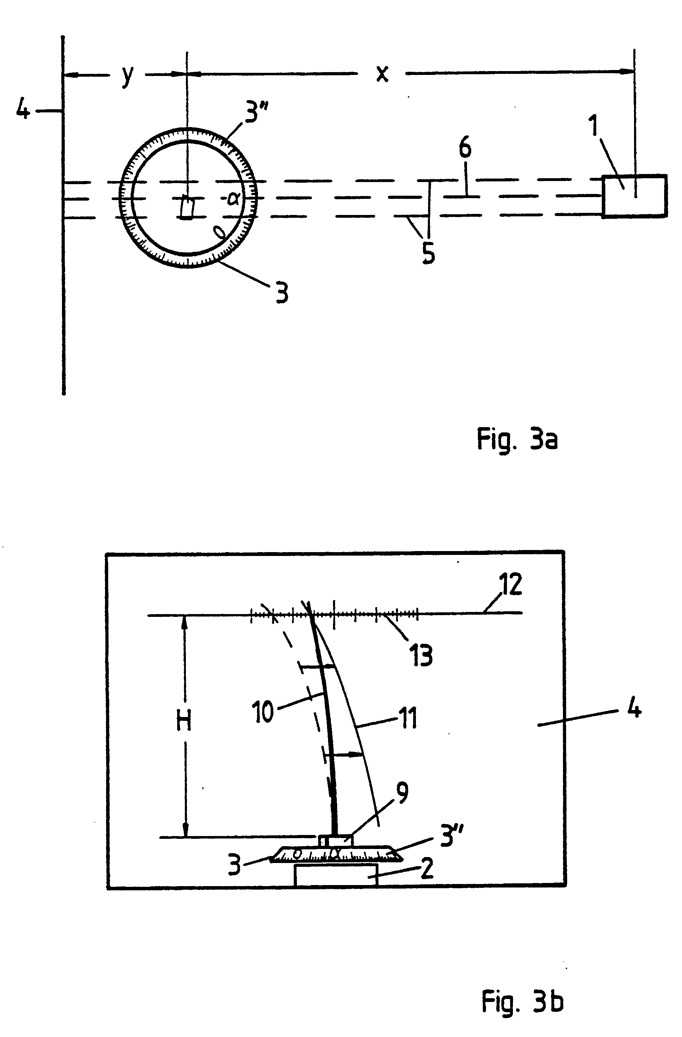

Die direkte Messung des Drallwinkels $\alpha$ erfolgt in einfacher Weise dadurch, daß der Drehteller 3 in Richtung des in Fig. 2a eingezeichneten Pfeils so lange gedreht wird, bis auf dem Bildschirm 4 in Höhe H der Markierungslinie 12 das reflektierte Lichtbündel 11 auf den Probenschatten 10 fällt (vgl. Fig. 3a/3b). Fig. 3b zeigt, wie das reflektierte Lichtbündel 11 bei Drehung des Drehtellers 3 in Richtung des eingezeichneten Pfeils wandert, bis die Koinzidenz mit dem Probenschatten 10 eintritt. Der Drallwinkel $\alpha$ kann dann quantitativ an der Winkelskala 3" des Drehtellers 3 abgelesen werden.

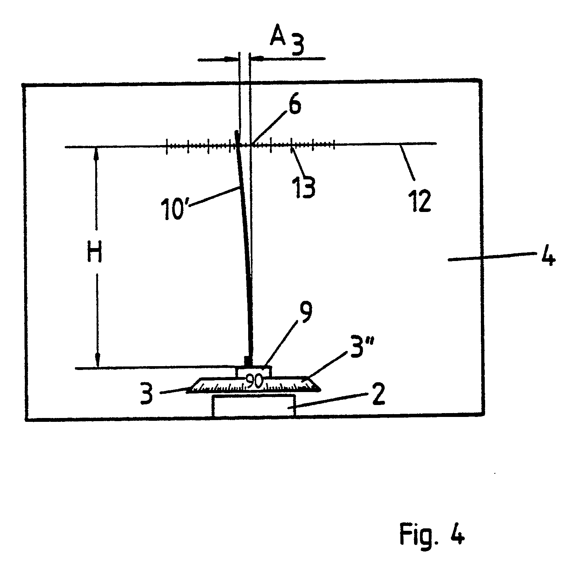

Wie die Fig. 4 zeigt, kann mit derselben Meßvorrichtung die Säbelförmigkeit SF - ebenfalls wieder auf eine bestimmte Länge bezogen - gemessen werden. Für die Messung der Säbelförmigkeit SF ist der Drehteller 3 um 90° zu drehen. Die Auslenkung $A_3$ dieses Probenschattens 10' von der optischen Achse 6 wird wieder auf dem Bildschirm 4 in Höhe H der Markierungslinie 12 angezeigt, und die Säbelförmigkeit SF wird in Skalenteilen abgelesen. Die Auslenkung $A_3$ wird wiederum senkrecht zu der Vertikalebene gemessen, in der die optische Achse 6 liegt.

In den Fig. 2b, 3b und 4 ist im übrigen als Ergänzung jeweils die Stellung des Drehtellers 3 mit Winkelskala 3" angedeutet.

Sofern nicht unmittelbar ein vom zu untersuchenden Band 7 abgetrennter Bandstreifen 14 als Probestreifen 8 verwendet werden kann, wird die Probenvorbereitung gemäß Fig. 5 vorgenommen. Danach wird von dem zu untersuchenden Metallband 7 ein Bandstreifen 14 definierter Länge $L_1$ abgeschnitten (Schnitt A - A). Im Abstand B von den Bandkanten 15 werden jeweils zwei Längsschnitte 16 auf definierte Länge $L_2$ eingesägt. Beim Herausfahren der Säge ist darauf zu achten, daß der Bandstreifen 14 seitlich niedergehalten wird, um das Auftreten zusätzlicher, unerwünschter Eigenspannungen zu vermeiden und um einen einwandfreien Sägeschnitt zu garantieren. Anschließend wird der Bandstreifen 14 in der Mitte längsgeteilt (Schnitt B - B) und die mittleren Streifen 17 werden längs der Linie C - C abgetrennt, so daß die schraffierten Probestreifen 8 mit nicht eingeschnittenem Ende 8' zur Messung zur Verfügung stehen.

Messungen der drei Größen Drallwinkel $\alpha$, Rollkrümmung RK und Säbelförmigkeit SF wurden beispielsweise an Probestreifen 8 aus Kupferlegierungen der Dicke 0,254 mm, der Länge $L_1$ = 170 mm, einer Schnittlänge $L_2$ = 150 mm und einer Breite B von 5 mm durchgeführt. Die Messung erfolgte dabei in einer definierten Höhe H = 140 mm. Der Abstand x von der Lichtquelle 1 zum Probenhalter 2 betrug dabei 120 cm, der Abstand y von Probenhalter 2 zum Bildschirm 4 5 cm.

An Probestreifen 8 aus für die Weiterverarbeitung geeigneten Bändern wurden dabei beispielsweise Drallwinkel von etwa 1 - 2° gemessen.

## Patentansprüche

1.  Verfahren zur Messung von Eigenspannungen in schmalen Metallbändern (7), insbes. aus Kupferlegierungen, durch Messung des Drallwinkels $\alpha$ und der Rollkrümmung RK an Probestreifen (8), welche aus dem Band (7) entnommen werden,
    dadurch gekennzeichnet,
    daß das Ende (8') des Probestreifens (8) in einer Ebene eingespannt wird, die mit der optischen Achse (6) eines Lichtbündels (5) koinzidiert,
    daß das Lichtbündel (5) auf den Probestreifen (8) fällt, wobei dieser einen Probenschatten (10) wirft und an seiner blanken Oberfläche das Lichtbündel (5) reflektiert und
    daß die Auslenkungen ($A_1$, $A_2$) gemessen werden, die der Probenschatten (10) und/oder das reflektierte Lichtbündel (11) in definiertem Abstand H von der Einspannstelle (9) des Endes (8') von der optischen Achse (6) erfahren.

2.  Verfahren zur Messung von Eigenspannungen in schmalen Metallbändern (7), insbes. aus Kupferlegie-

EP 0 332 721 B1

rungen, durch Messung der Säbelförmigkeit SF an Probestreifen (8), welche aus dem Band (7) entnommen werden,
dadurch gekennzeichnet,
daß das Ende (8') des Probestreifens (8) in einer Ebene eingespannt wird, die senkrecht zur optischen Achse (6) eines Lichtbündels (5) verläuft,
daß das Lichtbündel (5) auf den Probestreifen (8) fällt, wobei dieser einen Probenschatten (10') wirft,
und daß die Auslenkung ($A_3$) gemessen wird, die der Probenschatten (10') in definiertem Abstand H von der Einspannstelle (9) des Endes (8') von der optischen Achse (6) erfährt.

3. Verfahren nach Anspruch 1 oder 2, dadurch gekennzeichnet,
daß die Auslenkungen ($A_1$, $A_2$, $A_3$) an einem Bildschirm (4) in Skalenteilen (13) abgelesen werden.

4. Verfahren nach Anspruch 1, dadurch gekennzeichnet,
daß das Ende (8') des Probestreifens (8) in einem Probenhalter (2) mit Drehteller (3) eingespannt wird,
daß der Drehteller (3) so weit aus seiner Nullstellung gedreht wird, bis auf einem Bildschirm (4) das reflektierte Lichtbündel (11) auf den Probenschatten (10) fällt, und
daß der Drallwinkel $\alpha$ quantitativ auf einer Winkelskala (3") des Drehtellers (3) abgelesen wird.

5. Verfahren nach Anspruch 3 oder 4, dadurch gekennzeichnet,
daß der Bildschirm (4) senkrecht zur optischen Achse (6) angeordnet wird.

6. Verfahren nach einem oder mehreren der Ansprüche 3 bis 5, dadurch gekennzeichnet,
daß das Ende (8') des Probestreifens (8) in definiertem Abstand y von dem Bildschirm (4) eingespannt ist.

7. Verfahren nach Anspruch 4, 5 oder 6, dadurch gekennzeichnet,
daß sich eine Kante (8") des Endes (8') in der Drehachse (3') des Drehtellers (3) befindet.

8. Verfahren nach einem oder mehreren der Ansprüche 1 bis 7, dadurch gekennzeichnet,
daß Probestreifen (8) aus dem zu untersuchenden Band (7) entnommen werden, indem ein Bandstreifen (14) der Länge $L_1$ abgetrennt wird, jeweils im Abstand B von den Bandkanten (15) zwei Längstrennungen (16) der Länge $L_2 < L_1$ eingebracht werden, der Bandstreifen (14) in der Mitte längsgeteilt wird und die mittleren Streifen (17) abgetrennt werden.

9. Verfahren nach Anspruch 8, dadurch gekennzeichnet,
daß bei einer Dicke des Probestreifens (8) von 0,08 bis 1,5 mm die Längstrennungen (16), im Abstand B = 2 bis 6 mm eingebracht werden.

10. Verfahren nach Anspruch 8 oder 9, dadurch gekennzeichnet,
daß die Probestreifen (8) mit dem nicht eingeschnittenen Ende (8') eingespannt werden.

11. Vorrichtung zur Durchführung des Verfahrens nach den Ansprüchen 1 - 3, 5 - 7 und 10, mit einer Lichtquelle (1), einem im Abstand x davon angeordneten, drehbaren Probenhalter (2) mit mindestens zwei Einspannbacken (9) und einem im Abstand y vom Probenhalter (2) auf der von der Lichtquelle (1) abgewandten Seite angeordneten Bildschirm (4), der senkrecht zu einer optischen Achse (6) angeordnet ist, die durch das von der Lichtquelle (1) ausgesandte Lichtbündel (5) definiert ist, und mit einem
Bildschirm (4), der in definierten Höhen H oberhalb der Einspannbacken (9) zumindest eine horizontale Markierungslinie (12) aufweist, die mit Skalenteilen (13) versehen ist.

12. Vorrichtung nach Anspruch 11,
dadurch gekennzeichnet,
daß der Probenhalter (2) zwei zueinander parallele Einspannbacken (9) aufweist, von denen mindestens eine beweglich ist.

13. Vorrichtung nach Anspruch 12,
dadurch gekennzeichnet,
daß eine Einspannbacke (9) eine Ausfräsung zur Aufnahme des Endes (8') des Probestreifens (8)

5

aufweist.

14. Vorrichtung nach Anspruch 12 oder 13, zur Durchführung des Verfahrens nach Anspruch 4,
dadurch gekennzeichnet,
daß der Probenhalter (2) einen mit einer Winkelskala (3'') versehenen Drehteller (3) aufweist, mit dem die Einspannbacken (9) fest verbunden sind.

**Claims**

1. Method for the measurement of internal stresses in narrow metallic strip (7), especially copper-alloy strip, which comprises the measuring of the angle of twist $\alpha$ and of the permanent set RK of a specimen (8) taken from strip (7), wherein end (8') of specimen (8) is fixed in a plane coinciding with the center line (6) of luminuous beam (5), and wherein said luminuous beam (5) falls on specimen (8) which casts a shadow (10) and the bright surface of said specimen (8) reflects luminuous beam (5), and wherein excursions (A1, A2) from center line (6) of shadow (10) and/or reflected luminuous beam (11) at a defined distance H from the point of fixation (9) of end (8') are measured.

2. Method for the measurement of internal stresses in narrow metallic strip (7), especially copper-alloy strip, which comprises measuring of the edgewise curvature SF of specimen (8) taken from strip (7),
wherein end (8') of specimen (8) is fixed in a plane perpendicular to center line (6) of luminuous beam (5), and wherein luminuous beam (5) falls on specimen (8) which casts a shadow (10') and
wherein excursion (A3) of shadow (10') from center line (6) at a defined distance H from the point of fixation (9) of end (8') is measured.

3. Method according to claims 1 and 2,
wherein excursions (A1, A2 and A3) are read on scale (13) of screen (4).

4. Method according to claim 1,
wherein end (8') of specimen (8) is fixed in a specimen holder (2) with turntable (3),
wherein turntable (3) is turned away from its zero position far enough to make the reflected luminuous beam (11) coincide with shadow (10) on screen (4), and
wherein twist angle $\alpha$ is determined by means of dial (3'') of turntable (3).

5. Method according to claim 3 or 4,
wherein screen (4) is arranged at a right angle to center line (6).

6. Method according to one or several of claims 3 through 5,
wherein end (8') of specimen (8) is fixed at a defined distance y from screen (4).

7. Method according to claim 4, 5 or 6,
wherein edge (8'') of end (8') coïncides with the axis of rotation (3') of turntable (3).

8. Method according to one or several of claims 1 through 7,
wherein specimens (8) are taken from strip (7) to be tested in that a L1 long strip (14) is cut off and two longitudinal slits (16), L2 < L1 in length, are provided each at a distance B from strip edge (15), that strip (14) is slit in the middle and that the middle strips (17) are cut off.

9. Method according to claim 8 wherein a 0.08 to 1.5 mm thick specimen (8) is provided with longitudinal slits (16) at a distance of B = 2 to 6 mm.

10. Method according to claim 8 or 9, wherein specimens (8) are fixed at their unslit end (8').

11. Device for the implementation of the method according to claims 1 through 3, 5 through 7, and 10, comprising a source of light (1), a rotary specimen holder (2) having at least two clamping jaws (9) positioned at a distance x from light source (1), and a screen (4) arranged at a distance y from specimen holder (2) on the other side of same and at a right angle to the center line (6) of the luminuous beam (5) emitted by light source (1), said screen (4) having at least one horizontal marking line (12) with a scale (13) at a defined distance H above the clamping jaws (9).

12. Device according to claim 11, wherein specimen holder (2) comprises two parallel clamping jaws (9), one or both cf which are adjustable.

13. Device according to claim 12, wherein one clamping jaw (9) comprises a milled portion to receive end (8') of specimen (8).

14. Device according to claim 12 or 13 to implement the method as per claim 4 wherein specimen holder (2) comprises a turntable (3) having a scale (3''), and clamping jaws (9) firmly connected to turntable (3).

## Revendications

1. Procédé des mesure de tensions internes dans les bandes métalliques étroites (7), notamment en alliages cuivreux, qui comporte la mesure de l'angle de torsion $\alpha$ et de la courbure d'enroulement RK d'un spécimen (8) prélevé de la bande (7),
   caractérisé en ce que l'extrémité (8') du spécimen (8) est fixée sur un plan coïncidant avec l'axe (6) du faisceau lumineux (5) et
   en ce que le faisceau lumineux (5) tombe sur le spécimen (8) qui projette une ombre (10) et reflète le faisceau lumineux (5) et
   en ce que sont mesurées les excursions (A1, A2) de l'ombre (10) et/ou du reflet (11) du faisceau lumineux depuis l'axe (6) à une distance H du point de fixation (9) de l'extrémité (8').

2. Procédé de mesure des tensions internes dans les bandes métalliques étroites (7), notamment en alliages cuivreux, qui comporte la mesure de la flèche SF du spécimen (8) prelevé de la bande (7),
   caractérisé en ce que l'extrémité (8') du spécimen (8) est fixée sur un plan perpendiculaire à l'axe (6) du faisceau lumineux (5) et
   en ce que le faisceau lumineux (5) tombe sur le spécimen (8) qui projette une ombre (10') et
   en ce que l'on mesure l'excursion (A3) de l'ombre (10') depuis l'axe (6) à une distance H du point de fixation (9) de l'extrémité (8').

3. Procédé selon l'une des revendications 1 ou 2,
   caractérisé en ce que les excursions (A1, A2, A3) sont relevées sur l'échelle (13) de l'écran (4).

4. Procédé selon la revendication 1,
   caractérisé en ce que l'extrémité (8') est fixée dans un porte-spécimen (2) avec une table tournante (3),
   en ce que table tournante (3) est tournée depuis sa position de zéro jusqu'à ce que le reflet du faisceau lumineux (11) coïncide avec l'ombre (10) du spécimen sur l'écran (4) et
   en ce que l'angle de torsion $\alpha$ est relevé sur l'échelle (3'') de la table tournante (3).

5. procédé selon l'une des revendications 3 ou 4,
   caractérisé en ce que l'écran (4) est positionné de façon perpendiculaire à l'axe (6).

6. Procédé selon l'une quelconque des revendications 3 à 5,
   caractérisé en ce que l'extrémité (8') du spécimen (8) est immobilisée à une distance y de l'écran (4).

7. Procédé selon l'une quelconque des revendications 4, 5 ou 6,
   caractérisé en ce qu'un bord (8'') de l'extrémité (8') coïncide avec l'axe rotation (3') de la table tournante (3).

8. Procédé selon l'une quelconque des revendications 1 à 7,
   caractérisé en ce que les spécimens (8) sont prélevés de la bande (7) devant être testée en découpant une bande (14) de longueur L1, que deux fentes (16) de longueur L2 < L1 sont pratiquées dans la bande à une distance B des bords de la bande (15), que la bande (14) au milieu est refendue longitudinalement et que les deux bandes centrales (17) sont découpées.

9. Procédé selon revendication 8, caractérisé en ce que pour un spécimen (8) de 0,08 à 1,5 mm d'épaisseur, les fentes longitudinales (16) sont pratiquées à une distance B = 2 à 6 mm.

**10.** Procédé selon l'une des revendications 8 ou 9, caractérisé en ce que les spécimens (8) sont fixées à leur extrémité non refendue (8').

**11.** Dispositif destiné à la mise en oeuvre du procédé selon les revendications 1 à 3, 5 à 7 et 10, comprenant une source de lumière (1), un porte-spécimen rotatif (2) avec au moins deux mâchoires de serrage (9) se trouvant à une distance x de la source de lumière (1) et un écran (4) se trouvant à une distance y du porte-spécimen (2) de l'autre côté de ce dernier et perpendiculairement à l'axe (6) définie par le faisceau lumineux (5) émis par la source de lumière (1), l'écran (4) ayant au moins une ligne de marquage horizontale (12) et une échelle (13) à une distance H au-dessus des mâchoires de serrage (9).

**12.** Dispositif selon revendication 11, caractérisé en ce que le porte-spécimen (2) comprend deux mâchoires de serrage (9) parallèles, dont au moins une est ajustable.

**13.** Dispositif selon revendication 12, caractérisé en ce qu'une mâchoire de serrage (9) comprend une partie fraisée recevant l'extrémité (8') du spécimen (8).

**14.** Dispositif selon l'une des revendications 12 ou 13 pour la mise en oeuvre du procédé selon revendication 4,
caractérisé en ce que le porte-spécimen (2) comprend une table tournante (3) avec une échelle (3") à laquelle les mâchoires de serrage (9) sont fermement attachées.

Fig. 1

EP 0 332 721 B1

Fig. 2a

Fig. 2 b

Fig. 3a

Fig. 3b

Fig. 4

Fig. 5